# EUROPÄISCHE PATENTSCHRIFT

(11) **EP 2 535 535 B1**
(45) Veröffentlichungstag und Bekanntmachung des Hinweises auf die Patenterteilung: **17.12.2014**
(21) Anmeldenummer: 12163743.3
(22) Anmeldetag: 11.04.2012
(51) Int. Cl.: F01N 3/20, F01N 3/28, B01F 5/04, B01F 5/06

(54) **Statischer Mischer**
Static mixer
Mélangeur statique

(30) Priorität: 16.06.2011 DE 102011077645
(43) Veröffentlichungstag der Anmeldung: 19.12.2012
(73) Patentinhaber: Bosch Emission Systems GmbH & Co. KG, 70442 Stuttgart (DE)
(72) Erfinder: Geibel, Andreas, 70469 Stuttgart (DE)
(74) Vertreter: BRP Renaud & Partner mbB Rechtsanwälte Patentanwälte Steuerberater

(56) Entgegenhaltungen:
- EP-A2- 1 686 249
- EP-A2- 2 278 133
- DE-A1-102007 012 790
- DE-A1-102008 053 106
- US-A- 2 685 504
- US-A- 6 109 781

## Beschreibung

Die vorliegende Erfindung betrifft einen statischen Mischer zum Einbau in eine Fluidleitung, insbesondere zum Einbau in eine Abgasleitung einer Brennkraftmaschine, mit den Merkmalen des Oberbegriffs des Anspruchs 1 bzw. 2. Die Erfindung betrifft außerdem eine Abgasanlage für eine Brennkraftmaschine, insbesondere eines Kraftfahrzeugs, die mit wenigstens einem derartigen Mischer ausgestattet ist, wie sie z.B. in US 2685504 gezeigt ist.

Moderne Abgasanlagen von Brennkraftmaschinen können mit einer SCR-Anlage ausgestattet sein, um die NOX-Emissionen zu reduzieren. Eine derartige SCR-Anlage umfasst eine Reduktionsmittelzuführeinrichtung, mit deren Hilfe ein geeignetes Reduktionsmittel, wie zum Beispiel wässrige Harnstofflösung, in einen Abgasstrom eingebracht werden kann. Ferner ist stromab der Reduktionsmittelzuführeinrichtung ein SCR-Katalysator angeordnet, der Stickoxide mittels Ammoniak zu Wasser reduziert. Damit diese Reduktion im SCR-Katalysator ordnungsgemäß ablaufen kann, muss das in flüssiger Form eingebrachte Reduktionsmittel bis zum SCR-Katalysator weitgehend verdampft sein und möglichst homogen mit dem Abgasstrom vermischt sein. Insbesondere kann in dieser Mischstrecke, die den Abstand von der Reduktionsmittelzuführeinrichtung bis zum SCR-Katalysator bezeichnet, auch dazu genutzt werden, den in wässriger Lösung eingebrachten Harnstoff mittels Hydrolysereaktion in Ammoniak und Kohlendioxid umzuwandeln. Hierzu erfolgt zunächst eine Thermolyse, bei welcher der Harnstoff in Ammoniak und Isocyansäure umgewandelt wird. Anschließend erfolgt die eigentliche Hydrolyse, bei welcher die Isocyansäure mittels Wasser zu Ammoniak und Kohlendioxid umgewandelt wird.

Um die Homogenisierung, die Verdampfung und gegebenenfalls die Hydrolyse zu verbessern, ist es bekannt, in besagter Mischstrecke zumindest einen statischen Mischer anzuordnen.

Aus der DE 2 006 017 A2 ist ein statischer Mischer bekannt, der aus einem Ringkörper besteht, der eine Schaufelreihe mit mehreren vom Ringkörper nach innen abstehenden Leitschaufeln aufweist. Beim bekannten Mischer ist der Ringkörper zusammen mit den Leitschaufeln durch ein Blechformteil gebildet, das aus einem einzigen Blechkörper durch Umformung hergestellt ist. Hierzu wird ein Rohling in Form eines ebenen Blechkörpers zunächst mehrfach eingeschnitten, um die Leitschaufeln frei zu schneiden. Anschließend werden die Leitschaufeln vom übrigen Blechkörper abgewinkelt. Danach wird der Blechkörper mit abgewinkelten Leitschaufeln um eine quer zu seiner Längsrichtung verlaufende Achse gebogen, bis sich die Umfangsenden stoßen. Die Herstellung erfolgt somit in mehreren Schritten, was vergleichsweise aufwändig, zumindest zeitintensiv ist.

Die vorliegende Erfindung beschäftigt sich mit dem Problem, für einen statischen Mischer der vorstehend genannten Art eine verbesserte oder zumindest eine andere Ausführungsform anzugeben, die sich insbesondere durch eine preiswerte Herstellbarkeit auszeichnet. Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Ringkörper in der Umfangsrichtung aus wenigstens zwei Teilkörpern zusammenzubauen, wobei jeder Teilkörper mehrere Leitschaufeln aufweist. Es hat sich gezeigt, dass die Teilkörper mit Leitschaufeln aus Rohlingen in Form ebener Blechkörper durch einen einzigen Umformvorgang herstellbar sind, bei dem innerhalb eines einzigen Werkzeugs die Leitschaufeln freigeschnitten und abgewinkelt werden, während gleichzeitig auch der Blechkörper um eine quer zu seiner Längsrichtung verlaufende Biegeachse gebogen wird, um so in einem einzigen Fertigungsschritt den jeweiligen Teilkörper, der einem Umfangssegment des Ringkörpers entspricht, herzustellen. Mit einem Ringkörper, der sich über 360° geschlossen erstreckt, lässt sich eine derartige komplexe Umformung nicht in einem einzigen Arbeitsgang durchführen. Obwohl nun für die Herstellung des Mischers mehrere Einzelteile, nämlich die einzelnen Teilkörper hergestellt und aneinander befestigt werden müssen, hat sich überraschender Weise gezeigt, dass die Herstellung dieses mehrteiligen Mischers auf diese Weise insgesamt preiswerter ist als die bekannte Vorgehensweise, bei welcher der Ringkörper mit den Leitschaufeln aus einem einzigen Blechkörper hergestellt ist.

Zweckmäßig ist der Ringkörper aus zwei bis vier Teilkörpern zusammengebaut. Besonders vorteilhaft hat sich eine Ausführungsform erwiesen, bei welcher der Ringkörper aus drei Teilkörpern zusammengebaut ist.

Gemäß einer anderen Ausführungsform können die in Umfangsrichtung benachbarten Teilkörper im Bereich ihrer Umfangsenden ineinander eingreifen und miteinander verpresst sein. Hierdurch sind die benachbarten Teilkörper formschlüssig miteinander verbunden, ohne dass aufwändige stoffschlüssige Verbindungsmaßnahmen, wie zum Beispiel Löten und Schweißen, durchgeführt werden müssen. Mögliche Befestigungsmethoden sind beispielsweise Durchsetzfügen, Clinchen und Crimpen.

Zweckmäßig können die in Umfangsrichtung benachbarten Teilkörper mit ihren Umfangsenden auf Stoß angeordnet sein. Mit anderen Worten, die Umfangsenden der in Umfangsrichtung benachbarten Teilkörper stoßen in der Umfangsrichtung aneinander an. Hierdurch baut der Ringkörper auch im Übergangsbereich zwischen zwei benachbarten Teilkörpern flach. Insbesondere hat der Ringkörper in der Umfangsrichtung eine gleichbleibende Wandstärke.

Entsprechend einer besonders vorteilhaften Ausführungsform kann jeder Teilkörper an dem einen Umfangsende zumindest einen in Umfangsrichtung abstehenden Kopplungsvorsprung und am anderen Umfangsende zumindest eine dazu komplementäre Kopplungsaufnahme aufweisen. Zum Verbinden von in Umfangsrichtung benachbarten Teilkörpern kann nun der wenigstens eine Kopplungsvorsprung des einen Teilkörpers in die wenigstens eine Kopplungsaufnahme des anderen Teilkörpers in Eingriff gebracht werden. Die Kopplungsvorsprünge und die Kopplungsaufnahmen lassen sich integral an den Teilkörpern ausformen, so dass die Bereitstellung dieser Kopplungselemente keine zusätzlichen Kosten bedeutet.

Gemäß einer vorteilhaften Weiterbildung können Kopplungsvorsprung und Kopplungsaufnahme zur Ausbildung einer Formschlussverbindung, insbesondere zur Ausbildung eines Hinterschnitts in Umfangsrichtung, geformt sein. Hierdurch lassen sich die Teilkörper besonders einfach aneinander festlegen. Beispielsweise können Kopplungsvorsprung und Kopplungsaufnahme wie die Kopplungselemente von Puzzleteilen ausgestaltet sein, so dass sie, z.B. manuell, einfach ineinander in Eingriff gebracht werden können.

Besonders zweckmäßig ist eine Weiterbildung, bei welcher die stoßenden Umfangsenden im Bereich der ineinandergreifenden Kopplungsvorsprünge und Kopplungsaufnahme radial verpresst sind. Hierdurch lässt sich eine gezielte Deformation im Bereich der ineinandergreifenden Kopplungsvorsprünge erzeugen. Durch diese Verpressung bzw. Deformation werden die Kopplungsvorsprünge und die Kopplungsaufnahmen in der Umfangsrichtung und in der Axialrichtung bleibend miteinander verspannt, wodurch sich eine hinreichend feste Verbindung zwischen den benachbarten Teilkörpern einstellt.

Besonders zweckmäßig ist eine Ausführungsform, bei welcher die Teilkörper Gleichteile sind. Somit besteht der Ringkörper letztlich aus zwei oder mehr gleichen Teilkörpern, die in Umfangsrichtung aneinander anschließend angeordnet und miteinander verbunden sind. Durch die Verwendung von Gleichteilen lassen sich die Herstellungskosten für die Einzelteile reduzieren. Sofern genau zwei Teilkörper zum Herstellen des Ringkörpers verwendet werden, erstreckt sich jeder Teilkörper über 180° in der Umfangsrichtung. Sofern genau drei Teilkörper zum Herstellen des Ringkörpers verwendet werden, erstreckt sich jeder Teilkörper in der Umfangsrichtung über 120°. Bei vier oder mehr Teilkörpern ergeben sich dann entsprechende Umfangsabschnitte.

Besonders zweckmäßig ist eine Ausführungsform, bei welcher die jeweilige Leitschaufelreihe am Ringkörper axial stirnseitig angeordnet ist. Somit befindet sich die jeweilige Leitschaufelreihe, in welcher die Leitschaufeln in der Umfangsrichtung benachbart sind, am Anströmende bzw. am Abströmende des Mischers bzw. des Ringkörpers.

Besonders vorteilhaft ist nun eine Weiterbildung, bei welcher der Ringkörper an beiden axialen Stirnseiten jeweils eine Schaufelreihe aufweist. Mit anderen Worten, der Mischer weist anströmseitig und abströmseitig jeweils eine Schaufelreihe mit in Umfangsrichtung benachbarten Leitschaufeln auf. Aufgrund der in der Umfangsrichtung geteilten Struktur des Ringkörpers weist somit auch der jeweilige Teilkörper mehrere anströmseitige Leitschaufeln und mehrere abströmseitige Leitschaufeln auf.

Durch die Verwendung von zwei Schaufelreihen kann die Mischungswirkung des Mischers signifikant verbessert werden.

Die Leitschaufeln können gegenüber der ankommenden Abgasströmung eine Anstellung aufweisen, so dass sie die ankommende Abgasströmung mehr oder weniger in Umfangsrichtung ablenken. Zweckmäßig besitzen innerhalb derselben Schaufelreihe alle Leitschaufeln die gleiche Anstellung gegenüber der Abgasströmung, so dass die Durchströmung der Schaufelreihe zu einem Drall in der Abgasströmung führt. Die Strömungsrichtung des Abgases entspricht dabei der Axialrichtung des Mischers. Sofern nun zwei Schaufelreihen vorgesehen sind, können die Leitschaufeln beider Schaufelreihen gleichsinnig gegenüber der Abgasströmung angestellt sein, so dass die abströmseitige Schaufelreihe den mit Hilfe der anströmseitigen Schaufelreihe erzeugten Drall verstärkt. Ebenso ist es möglich, die Leitschaufeln der beiden Schaufelreihen gegensinnig gegenüber der Abgasströmung anzustellen. In der Folge reduziert oder eliminiert die abströmseitige Schaufelreihe den mit Hilfe der anströmseitigen Schaufelreihe erzeugten Drall. Hierdurch lässt sich eine besonders intensive Durchmischung realisieren.

Gemäß einer anderen Ausführungsform kann der jeweilige Teilkörper zwischen den axialen Stirnseiten des Ringkörpers zumindest eine radiale Durchgangsöffnung aufweisen. Mit Hilfe einer derartigen Durchgangsöffnung kann beispielsweise eine Fixierung des Teilkörpers innerhalb des Umformwerkzeugs besonders einfach durchgeführt werden. Ferner lässt sich diese Durchgangsöffnung auch dazu verwenden, den Teilkörper in einem Abgasrohr zu fixieren. Beispielsweise lässt sich im Bereich der Durchgangsöffnung besonders einfach eine Schweißnaht herstellen.

Bei einer weiteren Ausführungsform können die Leitschaufeln in der jeweiligen Schaufelreihe relativ zueinander berührungslos angeordnet sein. Hierdurch wird ein Kontakt zwischen Schaufeln derselben Schaufelreihe vermieden, was eine Geräuschentwicklung im Falle von Vibrationen vermeidet.

Besonders zweckmäßig können in der jeweiligen Schaufelreihe, vorzugsweise bei jedem Teilkörper, mehrere Leitschaufeln radial innen an einer kreisförmigen Kernzone enden, während zumindest eine Leitschaufel bis in diese Kernzone hineinragt. Durch diese Bauform lässt sich zum einen erreichen, dass die Schaufelreihe in der Axialrichtung nahezu blickdicht konfiguriert werden kann, so dass insbesondere ein Tröpfchendurchschlag vermieden werden kann. Dadurch, dass nicht alle Leitschaufeln in die Kernzone vorstehen, lässt sich auch eine Variante realisieren, bei welcher die Leitschaufeln einander nicht berühren.

Grundsätzlich können die Leitschaufeln an den jeweiligen Teilkörper angebaut sein. Bevorzugt ist jedoch eine Ausführungsform, bei welcher jeder Teilkörper integral mit seinen Leitschaufeln aus einem Stück hergestellt ist.

Eine besonders preiswerte Herstellbarkeit lässt sich dadurch erreichen, dass jeder Teilkörper mit seinen Leitschaufeln ein Blechformteil ist, das aus einem einzigen Blechkörper durch Umformung hergestellt ist.

Ein erfindungsgemäßes Verfahren zum Herstellen des Mischers charakterisiert sich in diesem Fall dadurch, dass Rohlinge, die durch ebene Blechstücke gebildet sind, jeweils in einem einzigen Umformwerkzeug zu kreisbogenförmig gekrümmten Teilkörpern mit davon abstehenden Leitschaufeln umgeformt werden. Die Teilkörpern werden dabei endgeformt und sind werkzeugfallend.

Eine erfindungsgemäße Abgasanlage für eine Brennkraftmaschine, insbesondere eines Kraftfahrzeugs, umfasst eine Abgasleitung, in der zumindest ein statischer Mischer der vorstehend beschriebenen Art angeordnet ist. Stromauf dieses Mischers kann die Abgasanlage eine Reduktionsmittelzuführeinrichtung aufweisen. Stromab des Mischers kann die Abgasanlage mit einem SCR-Katalysator ausgestattet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine,
- Fig. 2: eine isometrische Ansicht eines Mischers,
- Fig. 3: eine Axialansicht des Mischers,
- Fig. 4: eine isometrische Ansicht eines Teilkörpers,
- Fig. 5: eine andere isometrische Ansicht des Teilkörpers.

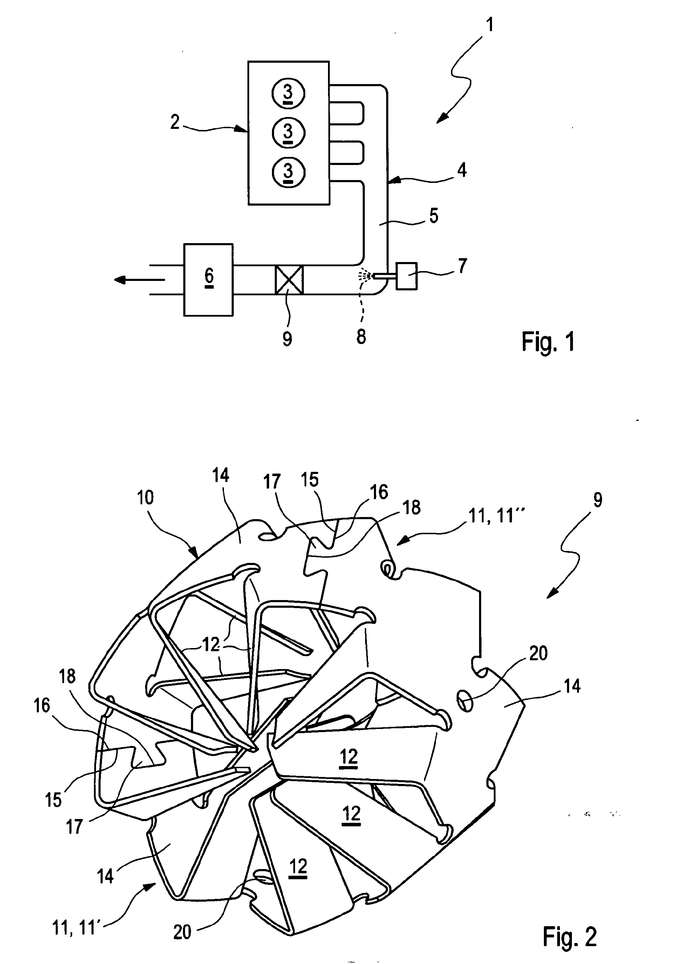

Entsprechend Figur 1 umfasst eine Brennkraftmaschine 1 einen Motorblock 2 mit mehreren Brennräumen 3 und eine Abgasanlage 4 zum Abführen von Abgasen von den Brennräumen 3. Die Abgasanlage 4 umfasst eine Abgasleitung 5, in der ein SCR-Katalysator 6 angeordnet ist. Stromauf des SCR-Katalysators 6 ist eine Reduktionsmittelzuführeinrichtung 7 an die Abgasleitung 5 angeschlossen, mit deren Hilfe ein Reduktionsmittel 8, zum Beispiel wässrige Harnstofflösung, in den in der Abgasleitung 5 geführten Abgasstrom einbringbar ist. Zwischen der Reduktionsmittelzuführeinrichtung 7 und dem SCR-Katalysator 6 ist ein statischer Mischer 9 in der Abgasleitung 5 angeordnet.

Der Mischer 9 besitzt gemäß den Figuren 2 bis 5 einen Ringkörper 10, der zumindest eine Schaufelreihe 11 aufweist, wobei jede Schaufelreihe 11 mehrere vom Ringkörper 10 nach innen abstehende Leitschaufeln 12 aufweist.

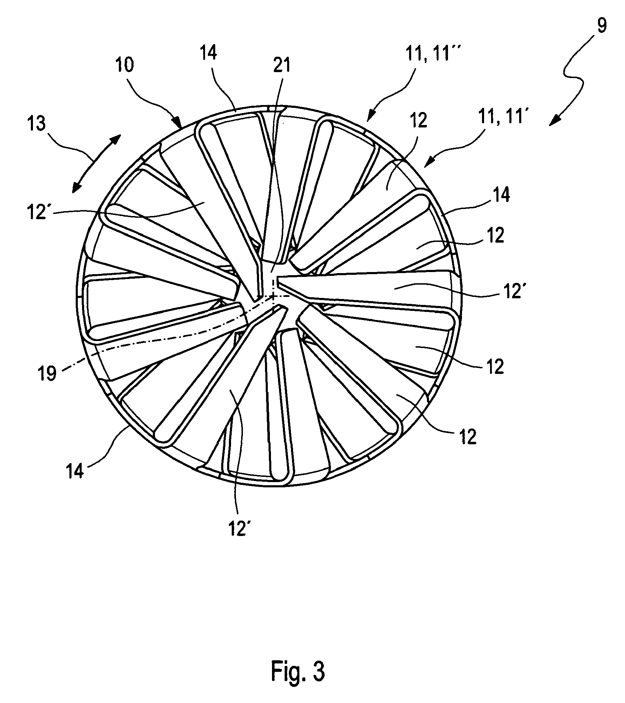

Beim hier vorgestellten Mischer 9 besteht der Ringkörper 10 in der Umfangsrichtung, die in Figur 3 durch einen Doppelpfeil angedeutet und mit 13 bezeichnet ist, aus zumindest zwei Teilkörpern 14, die jeweils mehrere Leitschaufeln 12 aufweisen. Ferner sind in der Umfangsrichtung 13 benachbarte Teilkörper 14 aneinander befestigt. Mit anderen Worten, der Ringkörper 10 ist aus mehreren Teilkörpem 14, die in der Umfangsrichtung 13 aneinander anschließen, zusammengebaut.

Beim hier gezeigten Beispiel sind genau drei derartige Teilkörper 14 vorgesehen, die sich jeweils über etwa 120° in der Umfangsrichtung 13 erstrecken.

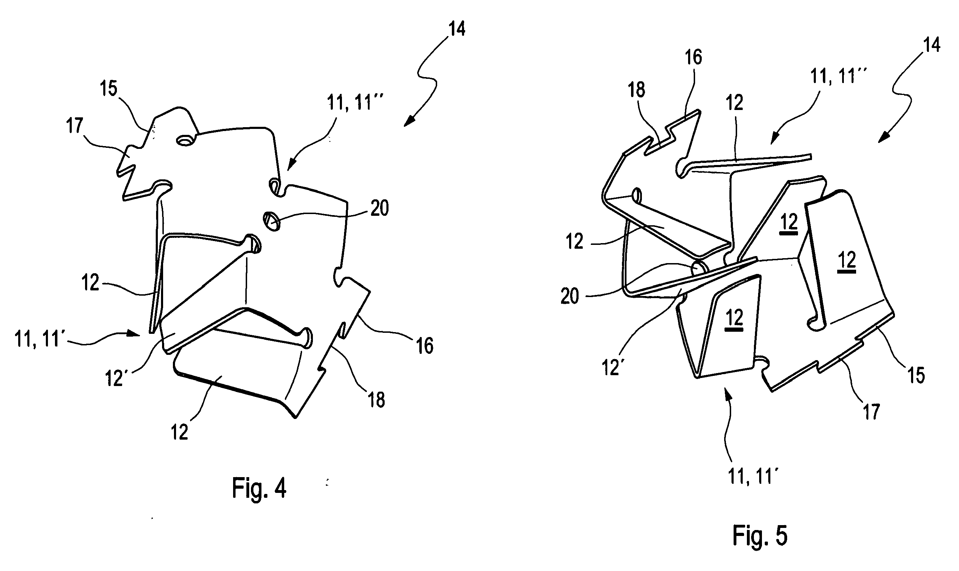

Gemäß den Figuren 4 und 5 sind die Leitschaufeln 12 am jeweiligen Teilkörper 14 integral ausgeformt, so dass der jeweilige Teilkörper 14 zusammen mit seinen Leitschaufeln 12 aus einem Stück hergestellt ist. Besonders zweckmäßig ist dabei der jeweilige Teilkörper 14 zusammen mit seinen Leitschaufeln 12 ein Blechformteil, das aus einem einzigen Blechkörper durch Umformung hergestellt ist.

Zur Befestigung der in Umfangsrichtung 13 benachbarten Teilkörper 14 können die Teilkörper 14 so konfiguriert sein, dass sie im Bereich ihrer Umfangsenden 15, 16 ineinander eingreifen und miteinander verpresst sind. Hierzu können die Umfangsenden 15, 16 auf Stoß angeordnet sein, so dass sie also nur in der Umfangsrichtung 13 aneinander anliegen, ohne einander radial zu überlappen oder zu überdecken. Hierdurch kann eine in Umfangsrichtung 13 durchgehend konstante Wandstärke für den Ringkörper 10 gewährleistet werden.

Bei der hier vorgestellten, besonders vorteilhaften Ausführungsform besitzt der jeweilige Teilkörper 14 an dem einen Umfangsende 15 einen in der Umfangsrichtung 13 abstehenden Kopplungsvorsprung 17 und am anderen Umfangsende 16 eine zum Kopplungsvorsprung 17 komplementäre Kopplungsaufnahme 18. Wie insbesondere Figur 2 entnehmbar ist, stehen zum Verbinden von in Umfangsrichtung 13 benachbarten Teilkörpern 14 der Kopplungsvorsprung 17 des einen Teilkörpers 14 und die Kopplungsaufnahme 18 des anderen Teilkörpers 14 miteinander in Eingriff. Zweckmäßig sind dabei Kopplungsvorsprung 17 und Kopplungsaufnahme 18 so geformt, dass sich dabei eine Formschlussverbindung herstellen lässt. Erreicht wird dies im Beispiel durch einen Hinterschnitt bezüglich der Umfangsrichtung, am Kopplungsvorsprung 17 bzw. in der Kopplungsaufnahme 18. Beispielsweise weitet sich der Kopplungsvorsprung 17 mit zunehmendem Abstand vom zugehörigen Umfangsende 15 auf. Komplementär dazu verjüngt sich die Kopplungsaufnahme 18 in Richtung zum zugehörigen Umfangsende 16. Kopplungsvorsprung 17 und Kopplungsaufnahme 18 können dabei insbesondere wie die Kopplungselemente von Puzzleteilen geformt sein und miteinander zusammenwirken. Für die Montage des Ringkörpers 10 werden die einzelnen Teilkörper 14 aneinander angesetzt, derart, dass die Kopplungsvorsprünge 17 in die zugehörigen Kopplungsaufnahmen 18 eingreifen. Anschließend kann im Bereich der ineinander eingreifenden Kopplungsvorsprünge 17 und Kopplungsaufnahmen 18 eine radiale Verpressung durchgeführt werden, bei der die Kopplungsvorsprünge 17 in der Umfangsrichtung 13 und axial, also parallel zu einer in Figur 3 angedeuteten Längsmittelachse 19 des Mischers 9 bzw. des Ringkörpers 10, ausgedehnt und dabei plastisch verformt werden. Hierdurch erfolgt eine bleibende Verspannung der Kopplungsvorsprünge 17 in den Kopplungsaufnahmen 18. Die einzelnen Teilkörper 14 sind anschließend ausreichend fest miteinander verbunden, wodurch der Ringkörper 10 und somit der Mischer 9 einfach manipulierbar bzw. handhabbar ist, um ihn beispielsweise in der Abgasleitung 5 montieren zu können.

Zweckmäßig handelt es sich bei den Teilkörpern 14 um Gleichteile, so dass im vorliegenden Fall drei gleiche Teilkörper 14 zum Ringkörper 10 zusammengebaut werden können.

Beim hier vorgestellten bevorzugten Beispiel besitzt der Ringkörper 10 zwei Schaufelreihen 11, die jeweils axial stirnseitig am Ringkörper 10 angeordnet sind. Die Montage des Mischers 9 in der Abgasleitung 5 erfolgt so, dass sich die Längsmittelachse 19 des Ringkörpers 10 parallel zur Hauptströmungsrichtung des Abgases in der Abgasleitung 5 erstreckt. Zweckmäßig ist dabei der Ringkörper 10 koaxial zur jeweiligen Abgasleitung 5 positioniert. Dementsprechend lassen sich die beiden Schaufelreihen 11 auch als anströmseitige Schaufelreihe 11' und abströmseitige Schaufelreihe 11" bezeichnen.

Die einzelnen Teilkörper 14 sind dann zweckmäßig ebenfalls für jede Schaufelreihe 11 mit mehreren Leitschaufeln 12 ausgestattet.

Die Leitschaufeln 12 besitzen gegenüber der Anströmrichtung des Abgases einen Anstellwinkel bzw. eine Anstellung. Innerhalb der gleichen Schaufelreihe 11 ist die Anstellung der zugehörigen Leitschaufeln 12 dabei gleich. Somit kann die Durchströmung der Schaufelreihe 11 die Abgasströmung mit einem Drall beaufschlagen. Im hier gezeigten Beispiel besitzen die Leitschaufeln 12 beider Schaufelreihen 11 gleichsinnige Anstellungen, wodurch die abströmseitige Schaufelreihe 11" den Drall der anströmseitigen Schaufelreihe 11' verstärkt.

Wie sich den Figuren 2, 4 und 5 entnehmen lässt, kann der jeweilige Teilkörper 14 zumindest eine radiale Durchgangsöffnung 20 aufweisen, die zwischen den axialen Stirnseiten des Ringkörpers 10 angeordnet ist. Die Durchgangsöffnung 20 kann beispielsweise während der Herstellung des jeweiligen Teilkörpers 14 zur Fixierung des als Rohling dienenden Blechkörpers in einem zugehörigen Umformwerkzeug verwendet werden. Ferner kann im Rahmen der Montage des Mischers 9 in der Abgasleitung 5 im Bereich dieser Durchgangsöffnung eine Fixierung des jeweiligen Teilkörpers 14 und somit des gesamten Ringkörpers 10 an der Abgasleitung 5 erfolgen.

Wie sich insbesondere den Figuren 2 bis 5 entnehmen lässt, sind die Leitschaufeln 12 innerhalb der jeweiligen Schaufelreihe 11 so angeordnet, dass sie einander nicht berühren. Ferner ist in Figur 3 eine kreisförmige Kernzone 21 erkennbar. Diese Kernzone 21 wird dadurch gebildet, dass innerhalb der jeweiligen Schaufelreihe 11 mehrere Leitschaufeln 12 radial innen an dieser Kernzone 21 enden, derart, dass die Kernzone 21 im Wesentlichen frei bleibt. Hierdurch wird insbesondere erreicht, dass sich die Leitschaufeln 12 nicht berühren. Im gezeigten Beispiel besitzt die anströmseitige Schaufelreihe 11' mehrere Leitschaufeln 12', die länger sind als die anderen Leitschaufeln 12 und dementsprechend bis in die Kernzone 21 hineinragen. Hierdurch kann auch im Bereich der Kernzone 21 der frei durchströmbare Querschnitt reduziert werden. Da nicht alle Leitschaufeln 12, sondern nur wenige Leitschaufeln 12' in die Kernzone 21 hineinragen, kann auch für diese Leitschaufeln 12' eine berührungslose Positionierung bzw. eine freistehende Anordnung gewährleisten werden.

Im gezeigten Beispiel besitzt nur die anströmseitige Schaufelreihe 11' derartige längere Leitschaufeln 12', die bis in die Kernzone 21 vorstehen. Bei der abströmseitigen Schaufelreihe 11" sind alle Leitschaufeln 12 gleich lang und enden an der Kernzone 21. Dementsprechend besitzt der jeweilige Teilkörper 14 jeweils wenigstens eine derartige längere Leitschaufel 12'.

Bei einer anderen Ausführungsform können auch beide Schaufelreihen 11 mit derartigen längeren Leitschaufeln 12' ausgestattet sein. Bei einer anderen Ausführungsform kann auch vorgesehen sein, dass nur die abströmseitige Schaufelreihe 11" derartige längere Leitschaufeln 12' aufweist.

Die Herstellung des Mischers 9 erfolgt derart, dass aus Rohlingen, die durch ebene Blechkörper gebildet sind, in einem Umformwerkzeug, insbesondere in einem einzigen Umformvorgang, die Teilkörper 14 mit den Leitschaufeln 12 werkzeugfallend endgeformt werden. Anschließend werden mehrere Teilkörper 14 zum Ringkörper 10 zusammengebaut und im Bereich ihrer Umfangsenden 15, 16 aneinander befestigt. Beispielsweise indem die stoßenden Umfangsenden 15, 16 im Bereich der ineinandergreifenden Kopplungsvorsprünge 17 und Kopplungsaufnahmen 18 radial verpresst werden. Anschließend ist der Ringkörper 10 bzw. der Mischer 9 fertiggestellt und kann in die Abgasleitung 5 eingebaut werden.

## Patentansprüche

1. Statischer Mischer zum Einbau in eine Fluidleitung, insbesondere Abgasleitung (5) einer Brennkraftmaschine (1), mit einem Ringkörper (10), der mindestens eine Schaufelreihe (11) mit mehreren vom Ringkörper (10) nach innen abstehenden Leitschaufeln (12) aufweist,
- wobei der Ringkörper (10) in der Umfangsrichtung (13) aus mindestens zwei Teilkörpern (14) besteht,
- wobei in der Umfangsrichtung (13) benachbarte Teilkörper (14) aneinander befestigt sind,
- wobei jeder Teilkörper (14) mehrere Leitschaufeln (12) aufweist,
- wobei die in Umfangsrichtung (13) benachbarten Teilkörper (14) im Bereich ihrer Umfangsenden (15, 16) ineinander eingreifen,
**dadurch gekennzeichnet,**
- **dass** die in Umfangsrichtung (13) benachbarten Teilkörper (14) im Bereich ihrer Umfangsenden (15, 16) miteinander verpresst sind,
- **dass** die in Umfangsrichtung (13) benachbarten Teilkörper (14) mit ihren Umfangsenden (15, 16) in der Umfangsrichtung (13) auf Stoß angeordnet sind.

2. Statischer Mischer zum Einbau in eine Fluidleitung, insbesondere Abgasleitung (5) einer Brennkraftmaschine (1), mit einem Ringkörper (10), der mindestens eine Schaufelreihe (11) mit mehreren vom Ringkörper (10) nach innen abstehenden Leitschaufeln (12) aufweist,
- wobei der Ringkörper (10) in der Umfangsrichtung (13) aus mindestens zwei Teilkörpern (14) besteht,
- wobei in der Umfangsrichtung (13) benachbarte Teilkörper (14) aneinander befestigt sind,
- wobei jeder Teilkörper (14) mehrere Leitschaufeln (12) aufweist,
**dadurch gekennzeichnet,**
- **dass** die in Umfangsrichtung (13) benachbarten Teilkörper (14) mit ihren Umfangsenden (15, 16) in der Umfangsrichtung (13) auf Stoß angeordnet sind,
- **dass** jeder Teilkörper (14) an dem einen Umfangsende (15) wenigstens einen in Umfangsrichtung (13) abstehenden Kopplungsvorsprung (17) und am anderen Umfangsende (16) wenigstens eine dazu komplementäre Kopplungsaufnahme (18) aufweist, wobei zum Verbinden von in Umfangsrichtung (13) benachbarten Teilkörpern (14) der wenigstens eine Kopplungsvorsprung (17) des einen Teilkörpers (14) mit der wenigstens eine Kopplungsaufnahme (18) des anderen Teilkörpers (14) in Eingriff steht,
- **dass** Kopplungsvorsprung (17) und Kopplungsaufnahme (18) zur Ausbildung einer Formschlussverbindung in der Umfangsrichtung (13) geformt sind.

3. Mischer nach Anspruch 2,
**dadurch gekennzeichnet,**
**dass** die in Umfangsrichtung (13) benachbarten Teilkörper (14) im Bereich ihrer Umfangsenden (15, 16) ineinander eingreifen und miteinander verpresst sind.

4. Mischer nach Anspruch 2 oder 3,
**dadurch gekennzeichnet,**
**dass** Kopplungsvorsprung (17) und Kopplungsaufnahme (18) zur Ausbildung einer Formschlussverbindung in Form eines Hinterschnitts in der Umfangsrichtung (13) geformt sind.

5. Mischer nach Anspruch 1,
**dadurch gekennzeichnet,**
**dass** jeder Teilkörper (14) an dem einen Umfangsende (15) wenigstens einen in Umfangsrichtung (13) abstehenden Kopplungsvorsprung (17) und am anderen Umfangsende (16) wenigstens eine dazu komplementäre Kopplungsaufnahme (18) aufweist, wobei zum Verbinden von in Umfangsrichtung (13) benachbarten Teilkörpern (14) der wenigstens eine Kopplungsvorsprung (17) des einen Teilkörpers (14) mit der wenigstens eine Kopplungsaufnahme (18) des anderen Teilkörpers (14) in Eingriff steht.

6. Mischer nach Anspruch 5,
**dadurch gekennzeichnet,**
**dass** Kopplungsvorsprung (17) und Kopplungsaufnahme (18) zur Ausbildung einer Formschlussverbindung, insbesondere eines Hinterschnitts, in der Umfangsrichtung (13) geformt sind.

7. Mischer nach einem der Ansprüche 2 bis 6,
**dadurch gekennzeichnet,**
**dass** die stoßenden Umfangsenden (15, 16) im Bereich der ineinandergreifenden Kopplungsvorsprung (17) und Kopplungsaufnahme (18) radial verpresst sind.

8. Mischer nach einem der Ansprüche 1 bis 7,
**dadurch gekennzeichnet,**
**dass** die Teilkörper (14) Gleichteile sind.

9. Mischer nach einem der Ansprüche 1 bis 8,
**dadurch gekennzeichnet,**
**dass** die jeweilige Schaufelreihe (11) am Ringkörper (10) axial stirnseitig angeordnet ist.

10. Mischer nach Anspruch 9,
**dadurch gekennzeichnet,**
**dass** der Ringkörper (10) an beiden axialen Stirnseiten jeweils eine Schaufelreihe (11) aufweist.

11. Mischer nach einem der Ansprüche 1 bis 10,
**dadurch gekennzeichnet,**
**dass** der jeweilige Teilkörper (14) zwischen den axialen Stirnseiten des Ringkörpers (10) zumindest eine radiale Durchgangsöffnung (20) aufweist.

12. Mischer nach einem der Ansprüche 1 bis 11,
**dadurch gekennzeichnet,**
- **dass** die Leitschaufeln (12) in der jeweiligen Schaufelreihe (11) relativ zueinander berührungslos angeordnet sind, und/oder
- **dass** zumindest in einer solchen Schaufelreihe (11) mehrere Leitschaufeln (12) radial innen an einer kreisförmigen Kernzone (21) enden, während zumindest eine Leitschaufel (12') bis in die Kernzone (21) hineinragt.

13. Mischer nach einem der Ansprüche 1 bis 12,
**dadurch gekennzeichnet,**
**dass** jeder Teilkörper (14) integral mit seinen Leitschaufeln (12) aus einem Stück hergestellt ist:

14. Mischer nach einem der Ansprüche 1 bis 13,
**dadurch gekennzeichnet,**
**dass** jeder Teilkörper (14) mit seinen Leitschaufeln (12) ein aus einem einzigen Blechkörper durch Umformung hergestelltes Blechformteil ist.

15. Abgasanlage für eine Brennkraftmaschine (1), insbesondere eines Kraftfahrzeugs, mit einer Abgasleitung (5), in der zumindest ein statischer Mischer (9) nach einem der Ansprüche 1 bis 14 angeordnet ist.

## Claims

1. A static mixer for installation in a fluid line, in particular exhaust line (5) of an internal combustion engine (1), with an annular body (10), which comprises at least one blade row (11) with multiple guide blades (12) standing away from the annular body (10) to the inside,
- wherein the annular body (10) in the circumferential direction (13) consists of at least two part bodies (14),
- wherein in circumferential direction (13) adjacent part bodies (14) are fastened to one another,
- wherein each part body (14) comprises multiple guide blades (12),
- wherein the in circumferential direction (13) adjacent part bodies (14) engage into one another in the region of their circumferential ends (15, 16),
**characterized**
- **in that** the part bodies (14) adjacent in circumferential direction (13) are pressed together in the region of their circumferential ends (15, 16),
- **in that** the part bodies (14) adjacent in circumferential direction (13) are arranged with their circumferential ends (15, 16) to abut in the circumferential direction (13).

2. The static mixer for installation in a fluid line, in particular exhaust line (5) of an internal combustion engine (1), with an annular body (10), comprising at least one blade row (11) with multiple guide blades (12) standing away from the annular body (10) to the inside,
- wherein the annular body (10) in the circumferential direction (13) consists of at least two part bodies (14),
- wherein part bodies (14) adjacent in the circumferential direction (13) are fastened to one another,
- wherein each part body (14) comprises multiple guide blades (12),
**characterized**
- **in that** the part bodies (14) adjacent in circumferential direction (13) are arranged with their circumferential ends (15, 16) to abut in the circumferential direction (13),
- **in that** each part body (14) at the one circumferential end (15) comprises at least one coupling protrusion (17) standing away in circumferential direction (13) and at the other circumferential end (16) comprises at least one coupling mounting (18) complementary thereto, wherein for connecting part bodies (14) adjacent in circumferential direction (13) the at least one coupling protrusion (17) of the one part body (14) is in engagement with the at least one coupling mounting (18) of the other part body (14),
- **in that** coupling protrusion (17) and coupling mounting (18) are shaped for forming a positively joined connection in the circumferential direction (13).

3. The mixer according to Claim 2, **characterized in that** the part bodies (14) adjacent in circumferential direction (13) engage into one another in the region of their circumferential ends (15, 16) and are pressed together.

4. The mixer according to Claim 2 or 3, **characterized in that** coupling protrusion (17) and coupling mounting (18) are shaped for forming a positively joined connection in the form of an undercut in the circumferential direction (13).

5. A mixer according to Claim 1, **characterized in that** each part body (14) at the one circumferential end (15) comprises at least one coupling protrusion (17) standing away in circumferential direction (13) and at the other circumferential end (16) comprises at least one coupling mounting (18) complementary thereto, wherein for connecting part bodies (14) adjacent in circumferential direction (13) the at least one coupling protrusion (17) of the one part body (14) is in engagement with the at least one coupling mounting (18) of the other part body (14).

6. The mixer according to Claim 5, **characterized in that** coupling protrusion (17) and coupling mounting (18) are shaped for forming a positively joined connection, in particular an undercut in the circumferential direction (13).

7. The mixer according to any one of the Claims 2 to 6, **characterized in that** the abutting circumferential ends (15, 16) are radially pressed together in the region of the inter-engaging coupling protrusion (17) and coupling mounting (18).

8. The mixer according to any one of the Claims 1 to 7, **characterized in that** the part bodies (14) are same parts.

9. The mixer according to any one of the Claims 1 to 8, **characterized in that** the respective blade row (11) is arranged on the annular body (10) at the axial face end.

10. The mixer according to Claim 9, **characterized in that** the annular body (10) on both axial face ends comprises a blade row (11) each.

11. The mixer according to any one of the Claims 1 to 10, **characterized in that** the respective part body (14) between the axial face ends of the annular body (10) comprises at least one radial passage opening (20).

12. The mixer according to any one of the Claims 1 to 11, **characterized**
- **in that** the guide blades (12) in the respective blade row (11) are arranged contactless relative to one another, and/or
- **in that** at least in one such blade row (11) multiple guide blades (12) terminate on a circular core zone (21) radially inside, while at least one guide blade (12') projects as far as into the core zone (21).

13. The mixer according to any one of the Claims 1 to 12, **characterized in that** each part body (14) is produced from one piece integrally with its guide blades (12).

14. The mixer according to any one of the Claims 1 to 13, **characterized in that** each part body (14) with its guide blades (12) is a shaped sheet metal part produced from a single sheet metal body through forming.

15. An exhaust system for an internal combustion engine (1), in particular of a motor vehicle, with an exhaust line (5), in which at least one static mixer (9) according to any one of the Claims 1 to 14 is arranged.

## Revendications

1. Mélangeur statique à monter dans une conduite de fluides, notamment une conduite de gaz d'échappement (5) d'un moteur à combustion interne (1), comportant un corps annulaire (10), qui présente au moins une rangée de pales (11) avec plusieurs pales directrices (12) dépassant vers l'intérieur à partir du corps annulaire (10),
- dans lequel le corps annulaire (10) est constitué dans la direction circonférentielle (13) d'au moins deux corps partiels (14),
- dans lequel les corps partiels (14) voisins dans la direction circonférentielle (13) sont fixés les uns aux autres,
- dans lequel chaque corps partiel (14) présente plusieurs pales directrices (12),
- dans lequel les corps partiels (14) voisins dans la direction circonférentielle (13) viennent en prise les uns avec les autres au niveau de leurs extrémités circonférentielles (15,16),
**caractérisé en ce que**
- les corps partiels (14) voisins dans la direction circonférentielle (13) sont pressés les uns avec les autres au niveau de leurs extrémités circonférentielles (15,16),
- les corps partiels (14) voisins dans la direction circonférentielle (13) sont disposés en butée par leurs extrémités circonférentielles (15,16) dans la direction circonférentielle (13).

2. Mélangeur statique à monter dans une conduite de fluides, notamment une conduite de gaz d'échappement (5) d'un moteur à combustion interne (1), comportant un corps annulaire (10), qui présente au moins une rangée de pales (11) avec plusieurs pales directrices (12) dépassant vers l'intérieur à partir du corps annulaire (10),
- dans lequel le corps annulaire (10) est constitué dans la direction circonférentielle (13) d'au moins deux corps partiels (14),
- dans lequel les corps partiels (14) voisins dans la direction circonférentielle (13) sont fixés les uns aux autres,
- dans lequel chaque corps partiel (14) présente plusieurs pales directrices (12),
**caractérisé en ce que**
- les corps partiels (14) voisins dans la direction circonférentielle (13) sont disposés en butée par leurs extrémités circonférentielles (15,16) dans la direction circonférentielle (13),
- chaque corps partiel (14) présente sur une de ses extrémités circonférentielles (15) au moins une protubérance de couplage (17) dépassant dans la direction circonférentielle (13) et à l'autre extrémité circonférentielle (16) au moins un réceptacle de couplage (18) complémentaire à celle-ci, dans lequel pour relier les corps partiels (14) voisins dans la direction circonférentielle (13) au moins une protubérance de couplage (17) d'un corps partiel vient en prise avec au moins un réceptacle de couplage (18) de l'autre corps partiel,
- la protubérance de couplage (17) et le réceptacle de couplage (18) sont façonnés afin de réaliser une liaison par complémentarité de forme dans la direction circonférentielle (13).

3. Mélangeur selon la revendication 2, **caractérisé en ce que** les corps partiels (14) voisins dans la direction circonférentielle (13) viennent en prise l'un dans l'autre et sont pressés l'un avec l'autre au niveau de leur extrémité circonférentielle (15, 16).

4. Mélangeur selon la revendication 2 ou 3, **caractérisé en ce que** la protubérance de couplage (17) et le réceptacle de couplage (18) sont façonnés afin de réaliser une liaison par complémentarité de forme sous la forme d'une contre dépouille dans la direction circonférentielle (13).

5. Mélangeur selon la revendication 1, **caractérisé en ce que** chaque corps partiel (14) présente sur une extrémité circonférentielle (15) au moins une protubérance de couplage (17) dépassant dans la direction circonférentielle (13) et sur l'autre extrémité circonférentielle (16) au moins un réceptacle de couplage (18) complémentaire à celle-ci, dans lequel pour relier des corps partiels (14) voisins dans la direction circonférentielle (13) au moins une protubérance de couplage (17) d'un corps partiel (14) vient en prise avec au moins un réceptacle de couplage (18) de l'autre corps partiel (14).

6. Mélangeur selon la revendication 5, **caractérisé en ce que** la protubérance de couplage (17) et le réceptacle de couplage (18) sont façonnés pour réaliser une liaison par complémentarité de forme, notamment une contre dépouille, dans la direction circonférentielle (13).

7. Mélangeur selon une des revendications 2 à 6, **caractérisé en ce que** les extrémités circonférentielles en butée (15, 16) sont pressées radicalement au niveau du réceptacle de couplage (18) et de la protubérance de couplage (17) venant en prise l'un dans l'autre.

8. Mélangeur selon une des revendications 1 à 7, **caractérisé en ce que** les corps partiels (14) sont des pièces identiques.

9. Mélangeur selon une des revendications 1 à 8, **caractérisée en ce que** la rangée de pales (11) respective est disposée frontalement axialement sur le corps annulaire (10).

10. Mélangeur selon la revendication 9, **caractérisée en ce que** le corps annulaire (10) présente sur ses deux côtés frontaux axiaux respectivement une rangée de pales (11).

11. Mélangeur selon une des revendications 1 à 10, **caractérisé en ce que** le corps partiel (14) respectif présente entre les côtés frontaux axiaux du corps annulaire (10) au moins une ouverture traversante (20) radiale.

12. Mélangeur selon une des revendications 1 à 11, **caractérisé en ce que**
- les pales directrices (12) sont disposées sans contact les unes par rapport aux autres dans la rangée de pales (11) respective, et/ou
- au moins dans une telle rangée de pales (11) plusieurs pales directrices (12) aboutissent radicalement à l'intérieur à une zone de noyau circulaire (21) alors qu'au moins une pale directrice (12') saille jusqu'à l'intérieur de la zone de noyau (21).

13. Mélangeur selon une des revendications 1 à 12, **caractérisée en ce que** chaque corps partiel (14) est fabriqué en un seul tenant avec ses pales directrices (12) à partir d'une pièce.

14. Mélangeur selon une des revendications 1 à 13, **caractérisée en ce que** chaque corps partiel (14) avec ses pales directrices (12) est une pièce façonnée en tôle fabriquée par façonnage d'un corps de tôle individuelle.

15. Installation de gaz d'échappement pour un moteur à combustion interne (1), notamment d'un véhicule automobile, comportant une conduite de gaz échappement (5), dans laquelle au moins un mélangeur statique (9) selon une des revendications 1 à 14 est disposé.
